# EUROPEAN PATENT APPLICATION

(11) **EP 4 752 666 A1**
(43) Date of publication of application: **03.06.2026**
(21) Application number: 24851317.8
(22) Date of filing: 27.03.2024
(51) Int. Cl.: G05D 1/43

(54) **ARTICLE TRANSPORT FACILITY**

(30) Priority: 10.08.2023 JP 2023130910
(71) Applicant: Daifuku Co., Ltd., Osaka-shi, Osaka 555-0012 (JP)
(72) Inventor: KIMURA, Kazunari, Gamo-gun, Shiga 529-1692 (JP); KAMIKAWA, Yuji, Gamo-gun, Shiga 529-1692 (JP)
(74) Representative: Grosse, Felix Christopher
(86) International application number: PCT/JP2024/012222
(87) International publication number: WO 2025/032883

(57) **Abstract**

Provided is an article transport facility including a management device. The management device includes a processing section that executes reception processing, confirmation processing, and update processing. The reception processing includes receiving, in response to one of a plurality of detectable objects being replaced, input of position information of a replacement detectable object, which is the detectable object newly installed as a result of the replacement. The confirmation processing includes causing, with a command to a vehicle-side control section, a transport vehicle to travel to the replacement detectable object, detect the replacement detectable object with a detection section, and transmit identification information of the replacement detectable object acquired as a result of the detection to the management device. The update processing includes updating map data, based on the identification information of the replacement detectable object detected in the confirmation processing.

## Description

### Technical Field

The present invention relates to an article transport facility including a transport vehicle that travels along a travel surface and transports an article, a plurality of detectable objects that are installed on the travel surface and are each provided with unique identification information, and a management device that is communicably connected to the transport vehicle and is configured to control the transport vehicle and manage the detectable objects.

### Background Art

An example of such an article transport facility is disclosed in JP 7076935 (Patent Document 1). Reference signs shown in parentheses in the description of the background art below are from Patent Document 1.

In the facility disclosed in Patent Document 1, a plurality of marks (9) are interspersed on the floor surface. Each mark (9) is identifiable by a transport vehicle (4). An overall control computer (5) instructs the transport vehicle (4) as to a plurality of marks (9) that the transport vehicle (4) is to follow. The transport vehicle (4) sequentially detects the marks (9) with a mark sensor (48) while traveling.

### Prior Art Documents

### Patent Documents

Patent Document 1: JP 7076935

### Disclosure of the Invention

### Problem to be Solved by the Invention

In such a technical field, the marks may be replaced due to factors such as aging and damage. In this case, information of the mark that is replaced is exchanged in map data with information of the mark newly installed as a replacement mark. That is, the map data is updated, based on the information of the replacement mark. Generally, the map data is often updated with information after mark replacement that is input to the management device by a worker. However, if a human error such as an input error occurs, the map data will not be appropriately updated.

In view of the above situation, it is desirable to realize an article transport facility capable of appropriately updating map data.

An article transport facility including:
a transport vehicle configured to travel along a travel surface and transport an article;
a plurality of detectable objects each provided with unique identification information; and
a management device communicably connected to the transport vehicle, and configured to control the transport vehicle and manage the detectable objects,
the transport vehicle including:
   a vehicle-side control section configured to control operation of each section of the transport vehicle; and
   a detection section configured to detect the detectable objects,
the transport vehicle being configured to sequentially detect a plurality of the detectable objects with the detection section while moving,
the management device including:
   a storage section; and
   a processing section configured to perform computational processing,
the storage section storing, as map data, position information indicating a position of each detectable object on a map in association with the identification information of the detectable object,
the processing section being configured to execute reception processing, confirmation processing, and update processing,
the reception processing including receiving, in response to one of the detectable objects being replaced, input of the position information of a replacement detectable object which is the detectable object newly installed as a result of the replacement,
the confirmation processing including causing, with a command to the vehicle-side control section, the transport vehicle to travel to the replacement detectable object received in the reception processing, detect the replacement detectable object with the detection section, and transmit the identification information of the replacement detectable object acquired as a result of the detection to the management device, and
the update processing including updating the map data, based on the identification information of the replacement detectable object detected in the confirmation processing.

According to this configuration, in the confirmation processing, the transport vehicle moves in order to detect the replacement detectable object, and transmits identification information of the replacement detectable object acquired as a result of the detection to the management device. In this configuration, input of position information of the replacement detectable object is received in the reception processing, but, in the update processing for updating the map data, the identification information of the replacement detectable object detected in the confirmation processing is used. Thus, the map data is updated, based on the result of the transport vehicle actually detecting the replacement detectable object. Room for human error in the update processing can thereby be reduced. From the above, according to this configuration, the map data can be appropriately updated.

Further features and advantages of the technology according to the present disclosure will become apparent from the following description of exemplary and non-limiting embodiments with reference to the drawings.

### Brief Description of the Drawings

FIG. 1 is a plan view of an article transportation facility.
FIG. 2 is a front view of a transport vehicle.
FIG. 3 is a control block diagram.
FIG. 4 is a diagram showing map data.
FIG. 5 is a flowchart showing a processing procedure for updating map data.
FIG. 6 is a diagram illustrating updating of map data.
FIG. 7 is a flowchart showing a processing procedure for updating map data in a second embodiment.
FIG. 8 is a diagram illustrating updating of map data in the second embodiment.

### Best Mode for Carrying out the Invention

### First Embodiment

Initially, a first embodiment of an article transport facility will be described.

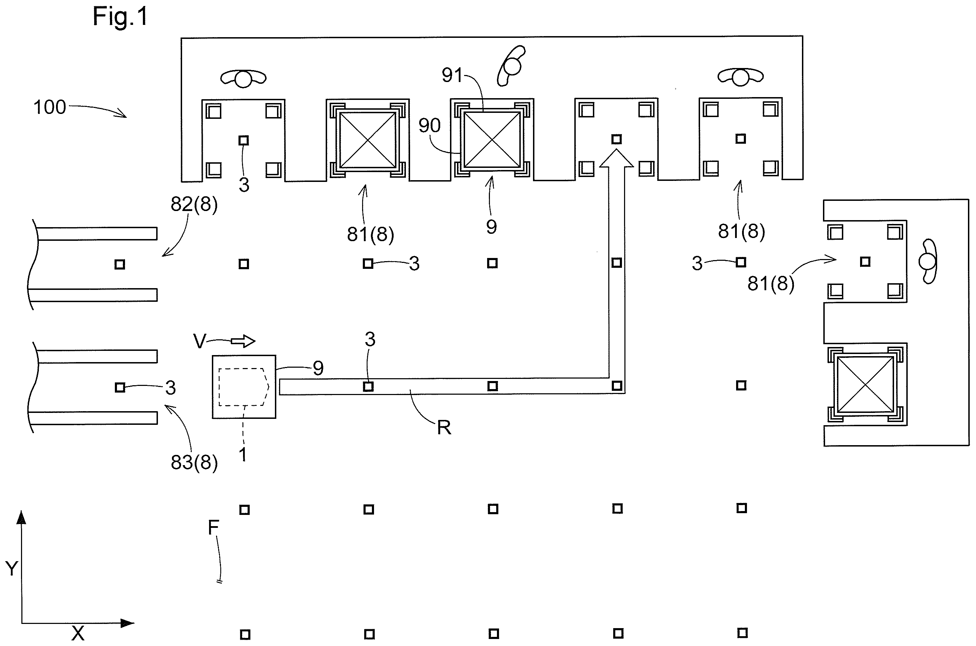

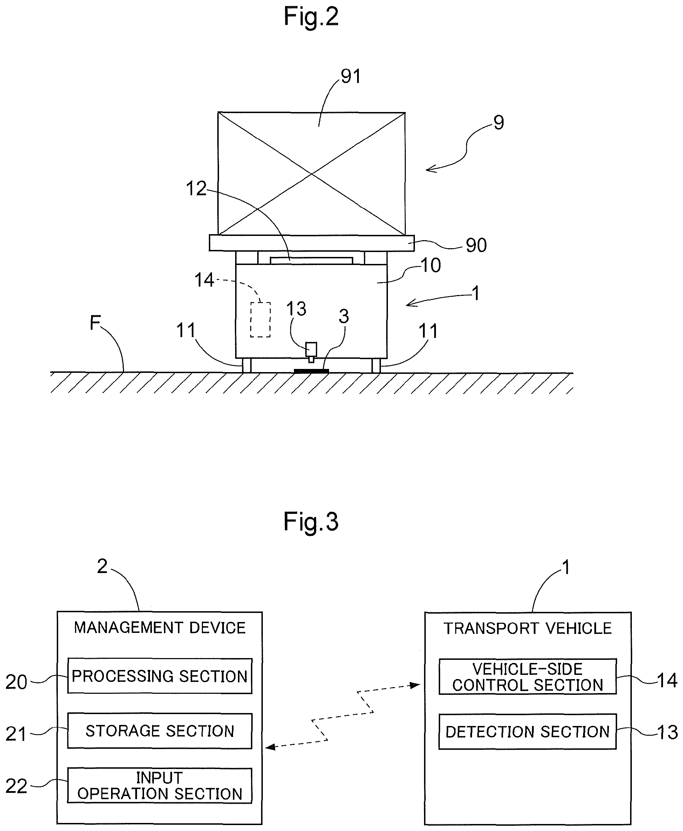

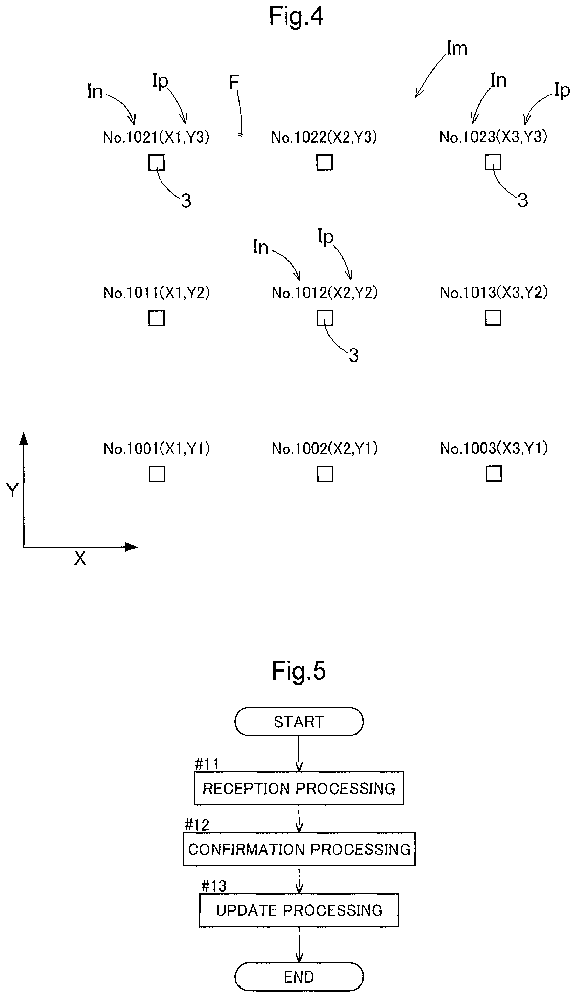

As shown in FIG. 1, an article transport facility 100 includes a transport vehicle 1 that travels along a travel surface F and transports articles 9, a plurality of detectable objects 3 that are installed on the travel surface F and are each provided with unique identification information In (see FIG. 4), and a management device 2 (see FIG. 3) that is communicably connected to the transport vehicle 1 and is configured to control the transport vehicle 1 and manage the detectable objects 3.

In the present embodiment, the travel surface F is a surface that extends in an X direction, which is a predetermined direction, and a Y direction orthogonal to the X direction. The travel surface F is formed on a floor of the article transport facility 100. The transport vehicle 1 travels on the travel surface F in the X or Y direction and transfers the articles 9 to and from transfer target points 8. In the present example, the transport vehicle 1 is constituted as a floor transport vehicle that travels on the floor surface.

In the present embodiment, the articles 9 include pallets 90 and one or more loads 91 placed on the pallets 90. In the present example, the transport vehicle 1 transports a pallet 90 with one or more loads 91 placed thereon, or an empty pallet 90 without a load 91 placed thereon. The transfer target points 8 are configured for the pallets 90 to be placed directly thereon.

In the present embodiment, the article transport facility 100 includes housing sections 81 that temporarily houses the articles 9, an automated warehouse (not shown) that stores the articles 9, a warehousing section 82 for moving the articles 9 into the automated warehouse, and a staging section 83 for moving the articles 9 out of the automated warehouse. For example, the housing sections 81 are adjacent to a work area. In the work area, the articles 9 housed in the housing sections 81 are handled by a worker or a robot. For example, tasks such as picking and packing can be performed in the work area.

At least part of each of the housing sections 81, the warehousing section 82, and the staging section 83 is constituted as a transfer target point 8. The transport vehicle 1 transfers articles 9 to and from these transfer target points 8.

As shown in FIG. 2, the transport vehicle 1 includes a body 10, a plurality of wheels 11, and a transfer section 12 that transfers the articles 9 to and from the transfer target points 8. In the present example, the plurality of wheels 11 include at least a pair of wheels 11 spaced apart from each other in the width direction. The pair of wheels 11 are each independently driven by separate motors or the like. By driving the pair of wheels 11 to rotate in opposite directions to each other, the transport vehicle 1 can turn on the spot around an up-down axis. The transport vehicle 1 changes the direction of travel to the X or Y direction by turning.

The transport vehicle 1 includes a vehicle-side control section 14 that controls operation of the various sections of the transport vehicle 1, and a detection section 13 that detects the detectable objects 3, and is configured to sequentially detect a plurality of the detectable objects 3 with the detection section 13 while moving. While moving, the transport vehicle 1 recognizes its own current position based on the identification information In (see FIG. 4) held by the detectable objects 3 that are detected. In the present example, the transport vehicle 1 includes a travel distance detection section (not shown) and is capable of ascertaining the distance traveled. The transport vehicle 1 moves on the travel surface F, based on the detection results of the travel distance detection section.

As shown in FIG. 1, the detectable objects 3 are distributed at a plurality of locations on the travel surface F. In the present embodiment, the detectable objects 3 are aligned in the X and Y directions. The distance between adjacent detectable objects 3 is a predetermined set distance. For example, the transport vehicle 1, having detected a specific detectable object 3, thereby travels the set distance toward the next detectable object 3 and detects the next detectable object 3. The transport vehicle 1 travels to the destination by repeating the above process. In the present example, the detectable objects 3 are disposed equidistantly on at least part of the area of the travel surface F.

The transport vehicle 1 travels along a movement route R that is set by selecting an unspecified number of detectable objects 3 from the plurality of detectable objects 3 and linking together the selected detectable objects 3. In the present embodiment, the movement route R of the transport vehicle 1 is set by combining a plurality of detectable objects 3 continuously disposed in the X direction and a plurality of detectable objects 3 continuously disposed in the Y direction. In other words, the movement route R of the transport vehicle 1 is constituted by combining a route extending in the X direction with a route extending in the Y direction.

For example, FIG. 1 shows the movement route R in the case where the transport vehicle 1, having received an article 9 at the staging section 83, transports the article 9 to one of the housing sections 81. In the present embodiment, the management device 2 (see FIG. 3) sets the movement route R of the transport vehicle 1. The management device 2 sets a movement route R from the transport source to the transport destination of the article 9 for each transport vehicle 1.

As shown in FIG. 2, the detectable objects 3 are installed on the travel surface F. In the present example, the detectable objects 3 are constituted using identification codes such as one-dimensional codes or two-dimensional codes. The detection section 13 of the transport vehicle 1 is constituted using a code reader that reads the identification codes. The present embodiment is, however, not limited to such a configuration, and, for example, the detectable objects 3 may be constituted using IC tags, and the detection section 13 may be constituted using an IC tag reader. Alternatively, the detectable objects 3 may be constituted using marks, and the detection section 13 may be constituted using an image capturing device that captures images of the marks.

As shown in FIG. 3, the article transport facility 100 includes the management device 2 that controls the transport vehicle 1 and manages the detectable objects 3. The management device 2 is capable of communicating with the transport vehicle 1.

The management device 2 includes a storage section 21 and a processing section 20 that performs computational processing. In the present embodiment, the management device 2 includes an input operation section 22 that is operated by a worker to input information. For example, the input operation section 22 is constituted using a keyboard, a mouse, a switch, a tablet terminal, or the like. Note that the management device 2 may be constituted by a set of a plurality of pieces of hardware capable of communicating with each other, rather than by a single piece of hardware.

The storage section 21 stores map information Im indicating a map of the area in which the transport vehicle 1 can move. Also, the storage section 21 stores, as map data, position information Ip indicating the position of each detectable object 3 on the map in association with the identification information In of the detectable object 3 (see FIG. 4).

FIG. 4 shows an image of map data. The map information Im visualizes a map and includes at least information of the travel surface F and the detectable objects 3. The position information Ip indicates the positions of the detectable objects 3, with the positions of the detectable objects 3 being indicated in an XY coordinate system (position in X direction and position in Y direction). The identification information In is unique information individually held by each detectable object 3. In the present example, the identification information In is a number given to each detectable object 3.

In the map data shown in FIG. 4, for example, a detectable object 3 whose identification information In is "No.1001" is located at a position "X1, Y1" in the XY coordinate system. Also, for example, a detectable object 3 whose identification information In is "No.1002" is located at a position "X2, Y1" in the XY coordinate system. In this way, identification information In and position information Ip for each detectable object 3 are shown in the map data.

This map data is stored in the storage section 21 of the management device 2 (see FIG. 3), as described above. The management device 2 sets the movement route R of each transport vehicle 1 by linking together the plurality of detectable objects 3 that exist between the transport source and the transport destination, with reference to the map data.

Here, the detectable objects 3 may be replaced due to factors such as aging and damage. Generally, replacement of a detectable object 3 is performed by a worker, and exchange of the information of the replaced detectable object 3 with the information of the replacement detectable object 3 in the map data is also performed by the worker through an input operation. The map data is then updated, based on the content of the input by the worker. However, if a human error such as an input error occurs, the map data will not be appropriately updated. The article transport facility 100 according to the present disclosure aims to appropriately update map data, by reducing room for human error in the update processing.

The processing section 20 (see FIG. 3) in the management device 2 executes reception processing, confirmation processing, and update processing. The processing section 20 executes the reception processing, the confirmation processing, and the update processing, when at least one of the detectable objects 3 installed on the travel surface F is replaced.

As shown in FIG. 5, the reception processing is executed prior to the confirmation processing and the update processing when one of the detectable objects 3 is replaced (step #11). In response to one of the detectable objects 3 being replaced, the processing section 20, in the reception processing, receives input of the position information Ip of a replacement detectable object 3, which is the newly installed detectable object 3.

The confirmation processing is executed after the reception processing and before the update processing (step #12). In the confirmation processing, the processing section 20, with a command to the vehicle-side control section 14 (see FIG. 3), causes the transport vehicle 1 to travel to the replacement detectable object 3, detect the replacement detectable object with the detection section 13, and transmit the identification information In of the replacement detectable object 3 acquired as a result of the detection to the management device 2. That is, as a result the confirmation processing, the transport vehicle 1 detects the replacement detectable object 3 and transmits the identification information In of the replacement detectable object 3 to the management device 2.

In the case where detectable objects that hold the position information Ip in a rewritable manner are used as the detectable objects 3, and information on the replacement position of the detectable object 3 is rewritten in advance to the position information Ip held by the replacement detectable object 3, a configuration such as the following can also be adopted. In the confirmation processing, the processing section 20 causes the transport vehicle 1 that has traveled to the replacement detectable object 3 to also detect the position information Ip with the detection section 13, in addition to the identification information In of the replacement detectable object 3, and to transmit the position information Ip of the replacement detectable object 3 acquired as a result of the detection to the management device 2 together with the identification information In. That is, as a result of the confirmation processing, the transport vehicle 1 detects the replacement detectable object 3 and transmits the identification information In and the position information Ip of the replacement detectable object 3 to the management device 2.

The update processing is executed after the confirmation processing (step #13). In the update processing, the processing section 20 updates the map data, based on the identification information In of the replacement detectable object 3 detected in the confirmation processing. That is, in the update processing, the identification information In of the detectable objects 3 in the map data is updated, by exchanging the identification information In of the replaced detectable object 3 stored in the map data with the identification information In of the replacement detectable object 3.

In the case where detectable objects that hold the position information Ip in a rewritable manner are used as the detectable objects 3, and information on the replacement position of the detectable object 3 is rewritten in advance to the position information Ip held by the replacement detectable object 3, a configuration such as the following can also be adopted. In the update processing, the processing section 20 updates the map data based on the position information Ip of the replacement detectable object 3, in addition to the identification information In of the replacement detectable object 3 detected in the confirmation processing. Note that the replacement detectable object 3 is installed at the same position as the replaced detectable object 3. Thus, the position information Ip of the replaced detectable object 3 basically matches the position information Ip of the replacement detectable object 3.

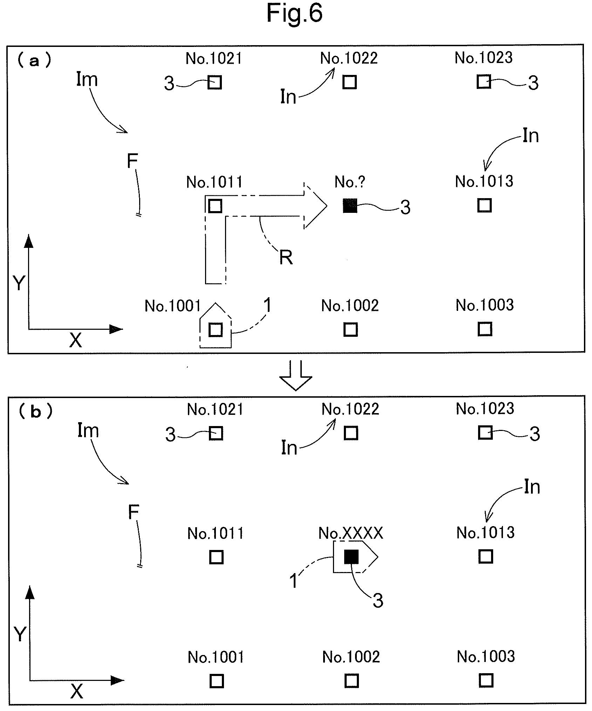

For example, the case where the detectable object 3 identified by "No.1012" disposed at the position "X2, Y2" in the XY coordinate system, as shown in FIG. 4, is replaced by a new detectable object 3 will be considered. FIG. 6 shows the state after the detectable object 3 is replaced. In FIG. 6, the blacked out detectable object 3 is the replacement detectable object 3. In the present embodiment, a detectable object 3 freely selected from the detectable objects 3 stored for use as replacement detectable objects is installed on the travel surface F in place of the detectable object 3 to be replaced. The management device 2 has not ascertained the identification information In (here, number) of the replacement detectable object 3 at this stage.

As a result of the reception processing, the processing section 20 receives input of the position information Ip of the replacement detectable object 3. When a detectable object 3 is replaced, the detectable object 3 to be replaced is exchanged with the new detectable object 3. Thus, the position information Ip of the replacement detectable object 3 will basically be the same as the position information Ip of the detectable object 3 to be replaced. In the case where, as in the present example, the detectable object 3 identified by "No.1012" disposed at the position "X2, Y2" in the XY coordinate system (see FIG. 4) is replaced by a new detectable object 3 that was freely selected and whose number is unknown, the position of this replacement detectable object 3 in the XY coordinate system will be "X2, Y2". Accordingly, the worker uses the input operation section 22 to input the position "X2, Y2" of the replacement detectable object 3 in the XY coordinate system, during execution of the reception processing by the processing section 20. In this way, input of the position information Ip of the replacement detectable object 3 is received by the input operation section 22 in the reception processing.

For example, the position information Ip of the replacement detectable object 3 may be input by the worker clicking or tapping on the position of the replacement detectable object 3 on map data displayed on a tablet screen to select the position. Alternatively, in the case where there is list data that compiles identification information In and position information Ip for each detectable object 3, the position information Ip of the replacement detectable object 3 may be input by an input to the list data.

The processing section 20 executes the confirmation processing after the reception processing. In the present embodiment, the processing section 20 sets the movement route R of the transport vehicle 1, with the position of the replacement detectable object 3 as the destination to which the transport vehicle 1 is directed, based on the input position information Ip of the replacement detectable object 3. In the illustrated example, the movement route R of the transport vehicle 1 is set by linking together the detectable object 3 identified by "No.1001", the detectable object 3 identified by "No.1011", and the replacement detectable object 3.

During execution of the confirmation processing, the transport vehicle 1 moves along the movement route R set by the processing section 20 toward the replacement detectable object 3 (see FIG. 6(a)). Upon arriving at the position of the replacement detectable object 3, the transport vehicle 1 detects the replacement detectable object 3 with the detection section 13. In the illustrated example, the transport vehicle 1 acquires "No.xxxx", which is the identification information In of the replacement detectable object 3, as a result of detecting the replacement detectable object 3. The transport vehicle 1 transmits the acquired identification information In of the replacement detectable object 3 to the management device 2. Note that in a configuration in which the replacement detectable object 3 holds its own position information Ip and the transport vehicle 1 detects that position information Ip, the transport vehicle 1 may transmit the position information Ip to the management device 2 in addition to the identification information In of the replacement detectable object 3.

Thereafter, the processing section 20 executes the update processing. The processing section 20 updates the map data, based on the position information Ip of the replacement detectable object 3 input in the reception processing and the identification information In of the replacement detectable object 3 transmitted to the management device 2 in the confirmation processing. In the present example, the processing section 20 updates the identification information In of the detectable object 3 (replacement detectable object 3) installed at "X2, Y2" in the XY coordinate system (see FIG. 4) to "No.xxxx". Note that, in the case where the transport vehicle 1 detects the position information Ip of the replacement detectable object 3 and transmits the position information Ip to the management device 2, the processing section 20 may compare the position information Ip input by the worker with the position information Ip acquired from the transport vehicle 1, and perform the update processing if the input position information Ip matches the acquired position information Ip.

According to the article transport facility 100 described above, the map data can be appropriately updated. Also, previously, when replacing a detectable object 3, it was necessary to prepare a new detectable object 3 having the same identification information In (here, number) as the detectable object 3 to be replaced. However, the detectable objects 3 installed on the travel surface F each has its own identification information In. Thus, previously, it was necessary to prepare a plurality of stocks for each of the detectable objects 3 set on the travel surface F, leading to an increase in cost. With the article transport facility 100 according to the present disclosure, the map data is updated using the identification information In of the replacement detectable object 3 actually detected in the confirmation processing. Thus, a new detectable object 3 to be used for replacement can be freely selected from the detectable objects 3 stored for use as replacement detectable objects. Accordingly, there is no need to prepare a new detectable object 3 having the same identification information In as the detectable object 3 to be replaced, allowing for a reduction in cost.

### Second Embodiment

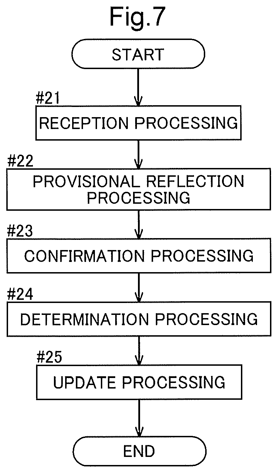

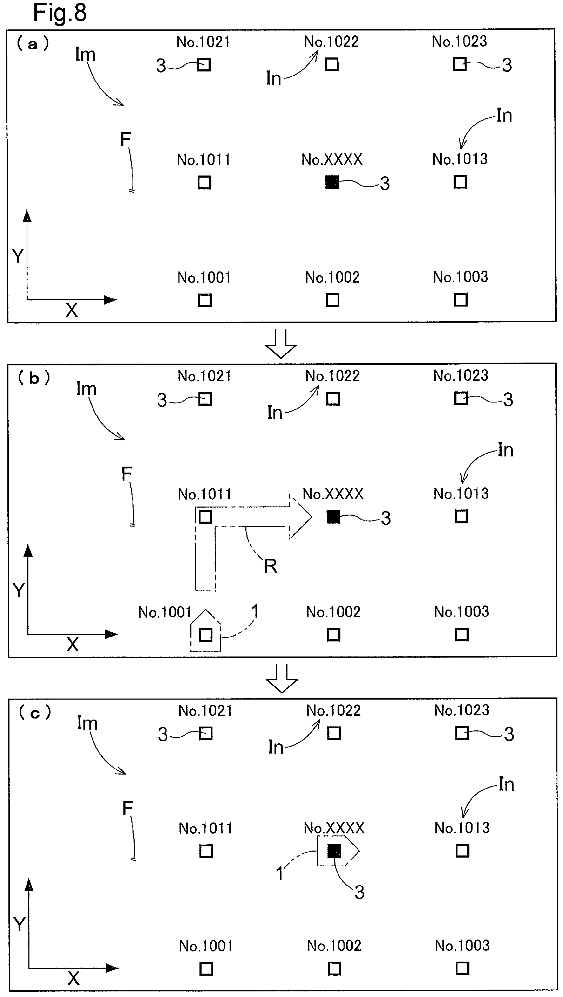

Next, a second embodiment of the article transport facility 100 will be described, mainly with reference to FIGS. 7 and 8. The following description mainly focuses on the differences from the above first embodiment. Points that are not specifically described are similar to the above first embodiment.

The processing section 20 of the management device 2 performs reception processing, confirmation processing, and update processing. In the present embodiment, the processing section 20 further performs provisional reflection processing and determination processing.

As shown in FIG. 7, the reception processing is executed first (step #21). In the reception processing according to the present embodiment, input of the identification information In of the replacement detectable object 3 is received. In this way, in the present embodiment, unlike the above first embodiment, the identification information In of the replacement detectable object 3 is received, in addition to the position information Ip of the replacement detectable object 3.

In the example shown in FIG. 8(a), "No.xxxx", which is the identification information In of the replacement detectable object 3, is input. That is, in the present embodiment, the management device 2 has ascertained the identification information In (here, number) of the replacement detectable object 3 at the reception processing stage before the confirmation processing.

The provisional reflection processing is executed after the reception processing and before the determination processing (step #22). In the present embodiment, the provisional reflection processing is, furthermore, executed before the confirmation processing. In the provisional reflection processing, the processing section 20 provisionally reflects the identification information In of the replacement detectable object 3 received in the reception processing in the map data. Herein, "provisional reflection" means that the targeted data is reflected as tentative data rather than as final data.

In the example shown in FIG. 8(a), "No.xxxx", which is the identification information In of the replacement detectable object 3, is provisionally reflected in the map data.

The confirmation processing is executed after the reception processing and before the determination processing (step #23). In the present embodiment, the confirmation processing is, furthermore, executed after the provisional reflection processing. In the confirmation processing, the processing section 20 causes the transport vehicle 1 to travel to the replacement detectable object 3, detect the replacement detectable object with the detection section 13, and transmit the identification information In of the replacement detectable object 3 acquired as a result of the detection to the management device 2. That is, as a result of the confirmation processing, the transport vehicle 1 detects the replacement detectable object 3 and transmits the identification information In of the replacement detectable object 3 to the management device 2.

In the example shown in FIG. 8(b), the processing section 20 sets the movement route R of the transport vehicle 1, with the position of the replacement detectable object 3 as the destination to which the transport vehicle 1 is directed, based on the input position information Ip of the replacement detectable object 3. In the illustrated example, the movement route R of the transport vehicle 1 is set by linking together the detectable object 3 identified by "No.1001", the detectable object 3 identified by "No.1011", and the replacement detectable object 3 that is expected to be "No.xxxx". In the example shown in FIG. 8(c), the transport vehicle 1 detects the replacement detectable object 3. The identification information In of the detected replacement detectable object 3 is "No.xxxx".

The determination processing is executed after the provisional reflection processing and the confirmation processing and before the update processing (step #24). In the determination processing, the processing section 20 determines whether the identification information In of the replacement detectable object 3 acquired from the transport vehicle 1 matches the identification information In of the replacement detectable object 3 provisionally reflected in the provisional reflection processing.

The update processing is executed after the determination processing (step #25). If it is determined in the determination processing that the acquired identification information In matches the provisionally reflected identification information In, the processing section 20, in the update processing, updates the map data after provisional reflection in the provisional reflection processing as correct map data.

In the example shown in FIG. 8(c), the identification information In of the replacement detectable object 3 acquired from the transport vehicle 1 is "No.xxxx" and the identification information In of the replacement detectable object 3 provisionally reflected in the provisional reflection processing is "No.xxxx", and thus the acquired identification information In matches the provisionally reflected identification information In. In this case, the determination result in the determination processing is "matched". In the update processing, the map data is then updated, with "No.xxxx" as the identification information In of the replacement detectable object 3.

Note that, if the determination result in the confirmation processing is "not matched", that is, if the identification information In of the replacement detectable object 3 acquired from the transport vehicle 1 does not match the identification information In of the replacement detectable object 3 provisionally reflected in the provisional reflection processing, the processing section 20 issues a warning. Basically, the detection result of the transport vehicle 1 is correct, however, and thus, after issuing the warning, the processing section 20 updates the map data, based on the identification information In of the replacement detectable object 3 detected by the transport vehicle 1, conditioned on the approval of a worker or the like.

### Other Embodiments

Next, other embodiments will be described.
(1) The above embodiments describe examples in which the processing section 20 sets the movement route R of the transport vehicle 1, with the position of the replacement detectable object 3 as the destination to which the transport vehicle 1 is directed, based on the input position information Ip of the replacement detectable object 3. However, the present invention is not limited to such an example, and the processing section 20 may set the movement route R of the transport vehicle 1, with the position of the replaced detectable object 3 as the destination to which the transport vehicle 1 is directed, based on the position information Ip of the replaced detectable object 3. That is, the position of the replaced detectable object 3 is the same as the position of the replaced detectable object 3, and thus, by directing the transport vehicle 1 to the position where the replaced detectable object 3 was located, the processing section 20 is, as a result, able to direct the transport vehicle 1 to the position of the replacement detectable object 3. Accordingly, with this configuration, the transport vehicle 1 can be moved to the position of the replacement detectable object 3 based on pre-replacement information and is thereby able to detect the replacement detectable object 3. In this case, in the reception processing, the position of the replaced detectable object 3 may be automatically input.
(2) The above embodiments describe examples in which at least reception processing, confirmation processing, and update processing are executed, in response to one of the detectable objects 3 installed on the travel surface F being replaced. However, the present invention is not limited to such an example, and, even in the case where two or more detectable object 3 are replaced, the map data can be appropriately updated by executing at least the reception processing, the confirmation processing, and the update processing. In this case, the above processing may be executed on the two or more replacement detectable objects 3 at the same time, or may be executed separately on the two or more replacement detectable objects 3.
(3) The above embodiments describe examples in which the transport vehicle 1 is constituted as a transport vehicle that travel on a floor surface. However, the present invention is not limited to such an example, and the transport vehicle 1 may be constituted as a tracked transport vehicle that travels on a rail. In the case where the rail is installed in the vicinity of the ceiling, the transport vehicle 1 is constituted as a so-called overhead transport vehicle. In such a case, the travel surface F is one of the surfaces extending along the rail, and the detectable objects 3 are installed on this travel surface F. The transport vehicle 1 sequentially detects the plurality of detectable objects 3 installed along the rail while moving.
(4) Note that the configuration disclosed in the above-described embodiments can also be applied in combination with configurations disclosed in other embodiments, as long as there are no inconsistencies. The embodiments disclosed herein, including other configurations thereof, are considered in all respects as illustrative. Accordingly, various modifications can be made as appropriate without departing from the gist of the present disclosure.

### Summary of Embodiment

The following is a summary of the present embodiment.

An article transport facility including:
a transport vehicle configured to travel along a travel surface and transport an article;
a plurality of detectable objects each provided with unique identification information; and
a management device communicably connected to the transport vehicle, and configured to control the transport vehicle and manage the detectable objects,
the transport vehicle including:
   a vehicle-side control section configured to control operation of each section of the transport vehicle; and
   a detection section configured to detect the detectable objects, the transport vehicle being configured to sequentially detect a plurality of the detectable objects with the detection section while moving,
the management device including:
   a storage section; and
   a processing section configured to perform computational processing,
the storage section storing, as map data, position information indicating a position of each detectable object on a map in association with the identification information of the detectable object,
the processing section being configured to execute reception processing, confirmation processing, and update processing,
the reception processing including receiving, in response to one of the detectable objects being replaced, input of the position information of a replacement detectable object which is the detectable object newly installed as a result of the replacement,
the confirmation processing including causing, with a command to the vehicle-side control section, the transport vehicle to travel to the replacement detectable object received in the reception processing, detect the replacement detectable object with the detection section, and transmit the identification information of the replacement detectable object acquired as a result of the detection to the management device, and
the update processing including updating the map data, based on the identification information of the replacement detectable object detected in the confirmation processing.

According to this configuration, in the confirmation processing, the transport vehicle moves in order to detect the replacement detectable object, and transmits identification information of the replacement detectable object acquired as a result of the detection to the management device. In this configuration, input of position information of the replacement detectable object is received in the reception processing, but, in the update processing for updating the map data, the identification information of the replacement detectable object detected in the confirmation processing is used. Thus, the map data is updated, based on the result of the transport vehicle actually detecting the replacement detectable object. Room for human error in the update processing can thereby be reduced. From the above, according to this configuration, the map data can be appropriately updated.

Preferably the processing section is further configured to execute provisional reflection processing and determination processing,
the reception processing includes receiving input of the identification information of the replacement detectable object,
the provisional reflection processing includes provisionally reflecting the identification information of the replacement detectable object received in the reception processing in the map data,
the determination processing includes determining whether the identification information of the replacement detectable object acquired from the transport vehicle matches the identification information of the replacement detectable object provisionally reflected in the provisional reflection processing, and
the update processing includes updating the map data after provisional reflection in the provisional reflection processing as correct map data, if it is determined in the determination processing that the acquired identification information matches the provisionally reflected identification information.

According to this configuration, in response to one of the detectable objects being replaced, the transport vehicle can be used to check whether the identification information of the replacement detectable object was input correctly. The map data is updated only if it can be determined that the map data is correct as a result of the confirmation. Accordingly, with this configuration, in the case where the content obtained through input of the identification information of the replacement detectable object is provisionally reflected in the map data, updating of the map data with the correct content is facilitated, by comparing the identification information that is input with the identification information that is actually detected by the transport vehicle.

Preferably, the detectable objects are distributed at a plurality of locations on the travel surface, and
the transport vehicle travels along a movement route set by selecting an unspecified number of detectable objects from the plurality of detectable objects and linking together the selected detectable objects.

This configuration is readily applied suitably to an article transport facility that includes an unmanned travel vehicle capable of traveling along any route set on a travel surface.

Preferably, the management device includes an input operation section configured to be operated by a worker to input information, and
the input operation section receives input of the position information of the replacement detectable object in the reception processing.

According to this configuration, after a worker replaces the detectable object, the worker is able to input information of the replacement detectable object to the management device. Such information input by a worker may contain errors, but, according to this configuration, as described above, the map data is updated based on the result of the transport vehicle actually detecting the replacement detectable object. Thus, room for human error in the update processing can be reduced. Accordingly, the map data can be appropriately updated.

### Industrial Applicability

The technology according to the present disclosure can be utilized in an article transport facility including a transport vehicle that travels on a travel surface and transports an article, a plurality of detectable objects that are installed on the travel surface and each have unique identification information, and a management device that is communicably connected to the transport vehicle and is configured to control the transport vehicle and manage the detectable objects.

### Description of Reference Signs

- 100: Article transport facility
- 1: Transport vehicle
- 13: Detection section
- 14: Vehicle-side control section
- 2: Management device
- 20: Processing section
- 21: Storage section
- 22: Input operation section
- 3: Detectable object
- 9: Article
- F: Travel surface
- Im: Map information
- In: Identification information
- Ip: Position information
- R: Movement route

## Claims

1. An article transport facility comprising:
a transport vehicle configured to travel along a travel surface and transport an article;
a plurality of detectable objects each provided with unique identification information; and
a management device communicably connected to the transport vehicle, and configured to control the transport vehicle and manage the detectable objects,
the transport vehicle including:
a vehicle-side control section configured to control operation of each section of the transport vehicle; and
a detection section configured to detect the detectable objects,
the transport vehicle being configured to sequentially detect a plurality of the detectable objects with the detection section while moving,
the management device including:
a storage section; and
a processing section configured to perform computational processing,
the storage section storing, as map data, position information indicating a position of each detectable object on a map in association with the identification information of the detectable object,
the processing section being configured to execute reception processing, confirmation processing, and update processing,
the reception processing including receiving, in response to one of the detectable objects being replaced, input of the position information of a replacement detectable object which is the detectable object newly installed as a result of the replacement,
the confirmation processing including causing, with a command to the vehicle-side control section, the transport vehicle to travel to the replacement detectable object received in the reception processing, detect the replacement detectable object with the detection section, and transmit the identification information of the replacement detectable object acquired as a result of the detection to the management device, and
the update processing including updating the map data, based on the identification information of the replacement detectable object detected in the confirmation processing.

2. The article transport facility according to claim 1,
wherein the processing section is further configured to execute provisional reflection processing and determination processing,
the reception processing includes receiving input of the identification information of the replacement detectable object,
the provisional reflection processing includes provisionally reflecting the identification information of the replacement detectable object received in the reception processing in the map data,
the determination processing includes determining whether the identification information of the replacement detectable object acquired from the transport vehicle matches the identification information of the replacement detectable object provisionally reflected in the provisional reflection processing, and
the update processing includes updating the map data after provisional reflection in the provisional reflection processing as correct map data, if it is determined in the determination processing that the acquired identification information matches the provisionally reflected identification information.

3. The article transport facility according to claim 1,
wherein the detectable objects are distributed at a plurality of locations on the travel surface, and
the transport vehicle travels along a movement route set by selecting an unspecified number of detectable objects from the plurality of detectable objects and linking together the selected detectable objects.

4. The article transport facility according to any one of claims 1 to 3,
wherein the management device includes an input operation section configured to be operated by a worker to input information, and
the input operation section receives input of the position information of the replacement detectable object in the reception processing.
